# FASCICULE DE BREVET EUROPEEN

(11) **EP 1 877 284 B1**
(45) Date de publication et mention de la délivrance du brevet: **10.09.2008**
(21) Numéro de dépôt: 06743838.2
(22) Date de dépôt: 24.04.2006
(51) Int. Cl.: B60R 19/18

(54) **AGENCEMENT POUR LE MONTAGE D'UN BOUCLIER DE VEHICULE AUTOMOBILE**
VORDERSTANGENANORDNUNG FÜR EIN KRAFTFAHRZEUG
MOTOR VEHICLE FACE BAR MOUNTING ARRANGEMENT

(30) Priorité: 27.04.2005 FR 0551091
(43) Date de publication de la demande: 16.01.2008
(73) Titulaire: Renault SAS, 92100 Boulogne Billancourt (FR)
(72) Inventeur: DO NASCIMENTO, Silvini, F-78390 Bois D'arcy (FR); NUNO, Fernando, F-92100 Boulogne Billancourt (FR); BRAULT, Christophe, F-78180 Montigny Le Bretonneux (FR)
(86) Numéro de dépôt international: PCT/FR2006/050381
(87) Numéro de publication internationale: WO 2006/114545

(56) Documents cités:
- EP-A- 0 150 636
- EP-A- 1 241 080
- EP-A- 1 300 293
- US-A- 5 498 044
- PATENT ABSTRACTS OF JAPAN vol. 2003, no. 01, 14 janvier 2003 (2003-01-14) & JP 2002 274298 A (FUJI HEAVY IND LTD), 25 septembre 2002 (2002-09-25)

## Description

L'invention concerne un agencement pour le montage d'un bouclier de véhicule automobile comportant un déflecteur d'orientation globalement horizontale s'étendant vers l'intérieur du véhicule, destiné à être monté sur un élément de structure inférieur.

Le document EP-A-0150636 illustre un bouclier de ce genre.

Un bouclier est généralement monté d'avant en arrière sur un véhicule avec l'aide le plus souvent de moyens d'indexation verticale.

Une partie inférieure du bouclier comporte un déflecteur qui, pendant le montage, glisse le long d'un élément de structure jusqu'à ce que le bouclier occupe une position dans laquelle la partie inférieure du bouclier peut être fixée sur l'élément de structure. Il faut cependant veiller à ce que le déplacement du bouclier s'effectue rapidement et sans difficulté. L'opération peut alors être rendue plus délicate quand le déflecteur comporte une pièce en saillie qui peut s'accrocher dans un élément du véhicule pendant le montage et risque alors d'entraîner un mauvais positionnement du bouclier et alors la nécessité de recommencer l'opération. La pièce en saillie peut aussi abîmer un élément du véhicule. Tout ceci risque donc de générer des pertes de temps ainsi que des coûts supplémentaires.

Afin de pallier ces inconvénients, l'invention a pour objet un agencement permettant un montage simple, rapide et sûr d'un bouclier.

A cet effet, l'invention propose un agencement de montage d'un bouclier de véhicule automobile du type cité ci-dessus, caractérisé en ce que le déflecteur comporte à chacune de ses extrémités une patte élastique, orientée vers l'intérieur du véhicule, sur laquelle sont ménagés au moins un plot de fixation et au moins une rampe de montage, de manière que le bouclier puisse passer, selon une trajectoire sensiblement longitudinale dirigée de l'extérieur vers l'intérieur du véhicule, d'une position initiale non montée dans laquelle la rampe se situe d'un côté de l'élément inférieur de structure à une position finale montée dans laquelle la rampe se trouve de l'autre côté de l'élément inférieur de structure.

Selon d'autres caractéristiques de l'invention:
- Lors du montage du bouclier,
   - une partie supérieure du bouclier se déplace le long de moyens d'indexation verticale et, simultanément,
   - dans un premier temps, la rampe glisse le long d'un bord de l'élément de structure inférieur, puis, dans un deuxième temps, un sommet de la rampe se déplace le long d'une paroi inférieure de l'élément de structure inférieur, jusqu'à ce que la rampe remonte automatiquement de l'autre côté de l'élément de structure inférieur sous l'effet de la patte élastique.
- Le sommet de la rampe se prolonge par une zone plane.
- Le plot de fixation est localisé entre la rampe et une zone de jonction de la patte et du déflecteur.
- Le plot de fixation se trouve entre la rampe et la zone plane.
- La rampe et le plot de fixation sont conformés de façon que, lors du montage du bouclier, le plot de fixation puisse glisser contre l'élément de structure inférieur sans être arrêté par le bord de l'élément de structure inférieur.
- La rampe présente la forme d'une nervure longitudinale.
- Le plot de fixation est destiné à la fixation d'un écran de passage de roue.
- Les moyens d'indexation verticale de la partie supérieure du bouclier sont formés par un élément de structure supérieur.
- Les moyens d'indexation verticale de la partie supérieure du bouclier sont constitués par des supports d'aile.
- Il est prévu des moyens de fixation du bouclier sur l'élément de structure inférieur.

D'autres caractéristiques et avantages de l'invention apparaîtront à la lecture de la description d'exemples de réalisation d'un agencement pour le montage d'un bouclier de véhicule automobile en référence aux dessins annexés dans lesquels :
- La figure 1 est une vue générale intérieure en perspective d'un agencement d'un bouclier selon l'invention, le bouclier étant en position montée.
- La figure 2 est une vue latérale en coupe de l'agencement, avant montage du bouclier.
- La figure 3 est une vue latérale en coupe de l'agencement, le bouclier étant en position montée.

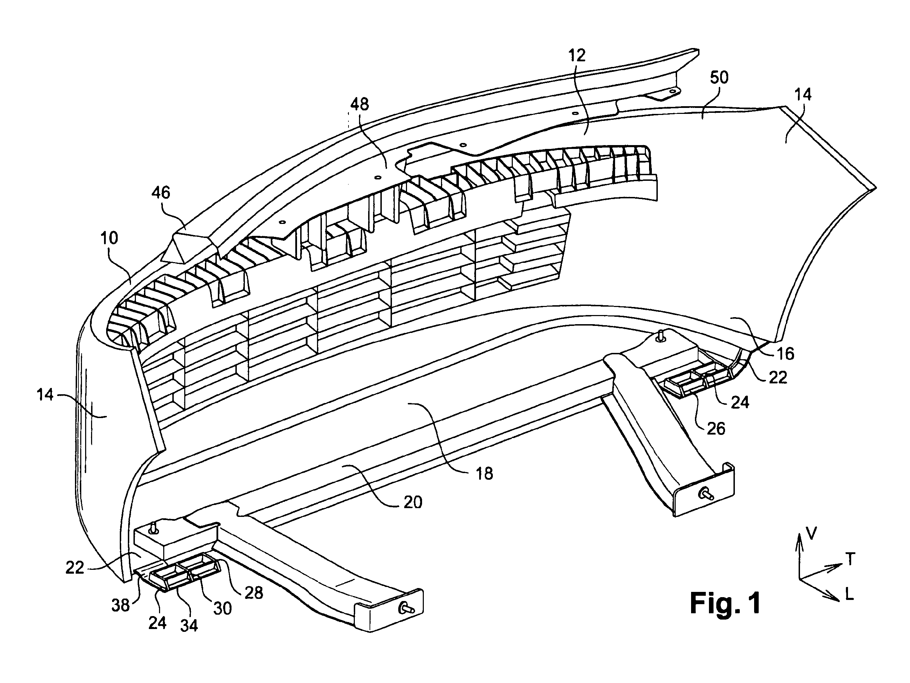

Dans la description qui suit, nous prendrons à titre non limitatif une orientation longitudinale, verticale et transversale indiquée par le trièdre L,V,T des figures 1 à 3.

Tel que représenté à la figure 1, un bouclier 10, destiné à équiper l'avant d'un véhicule (non représenté), comporte une paroi sensiblement verticale 12 présentant de chaque côté des retours latéraux 14 prolongeant la carrosserie (non représentée) du véhicule lorsque le bouclier 10 est en position montée. Un bord inférieur 16 du bouclier 10 comporte un déflecteur 18 s'étendant sensiblement horizontalement vers l'intérieur du véhicule et destiné à être fixé sur un élément de structure inférieur 20 du véhicule tel qu'une traverse inférieure, par exemple.

Le déflecteur 18 comporte à chacune de ses extrémités 22 une patte élastique 24 s'étendant sensiblement horizontalement vers l'intérieur du véhicule.

Une face supérieure 26 de chaque patte 24 comporte au moins un plot de fixation 28 et au moins une rampe 30. Le plot 28 est destiné, par exemple à la fixation d'un écran de passage de roue (non représenté).

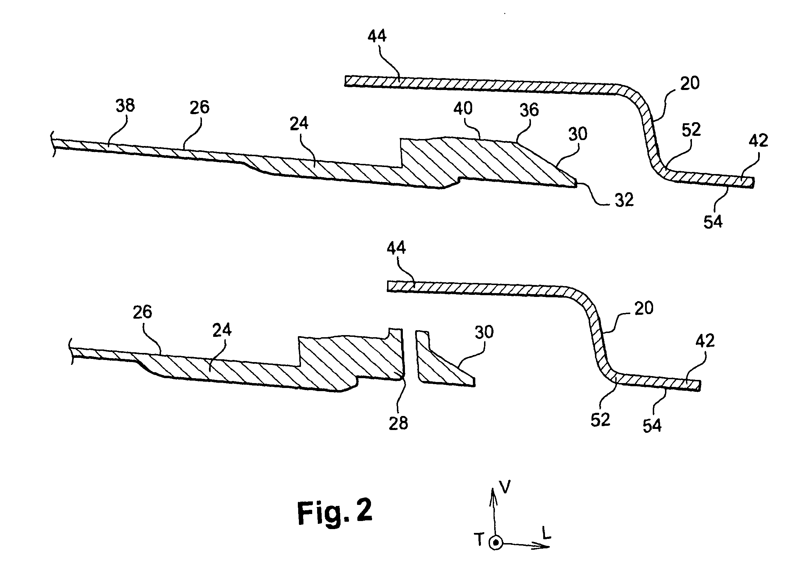

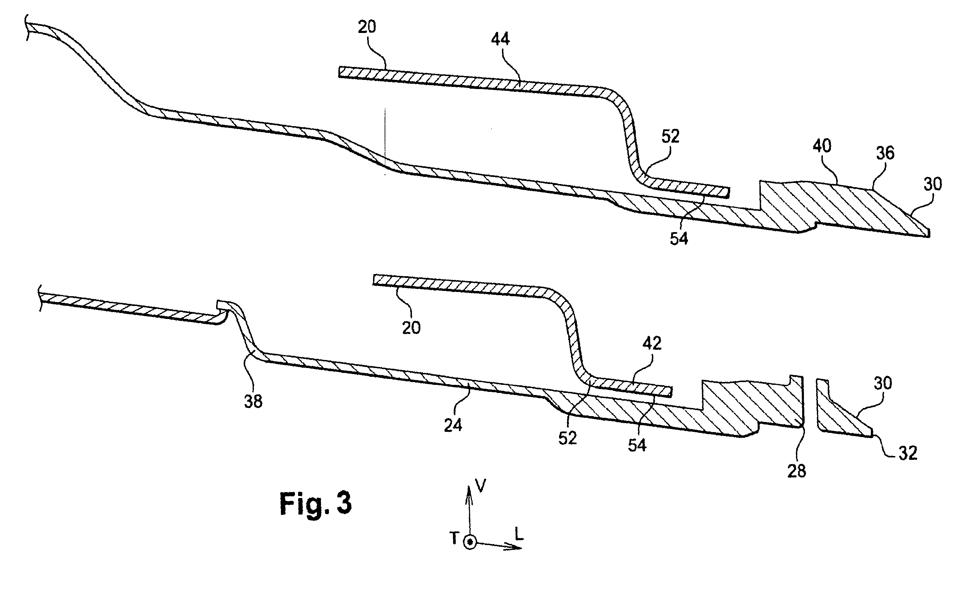

Tel que représenté aux figures 2 et 3, la rampe 30 est orientée selon une direction longitudinale, le bas 32 de la rampe 30 se trouvant du côté d'un bord libre 34 de la patte 24 et le sommet 36 de la rampe 30 se situant du côté d'une zone de jonction 38 entre le déflecteur 18 et la patte 24. Le sommet 36 de la rampe 30 peut se prolonger par une zone plane 40.

Le plot de fixation 28 se situe entre la rampe 30 et la zone de jonction 38 de la patte 24 et du déflecteur 18. Il peut être localisé, plus particulièrement, entre la rampe 30 et la zone plane 40.

Dans le mode de réalisation décrit ici, l'agencement comporte trois rampes 30 présentant la forme de nervures longitudinales, un plot de fixation 28 étant ménagé dans chaque nervure latérale.

Le montage du bouclier 10 s'effectue selon une direction sensiblement longitudinale de l'extérieur vers l'intérieur du véhicule.

La traverse inférieure 20 présente un profil coudé de façon qu'elle présente une portion dite basse 42 se dirigeant vers l'intérieur du véhicule et une portion dite haute 44 se dirigeant vers l'extérieur du véhicule.

Lors de l'opération de montage, de l'extérieur vers l'intérieur du véhicule, le bouclier 10 occupe d'abord une position initiale dite « non montée » dans laquelle la rampe 30 se trouve d'un côté de la traverse inférieure 20 puis une position finale dite « montée » dans laquelle la rampe 30 se trouve de l'autre côté de la traverse 20.

Le passage du bouclier 10 de sa position initiale non montée à sa position finale montée s'effectue par un déplacement simultané d'une partie supérieure 46 du bouclier 10 le long de moyens d'indexation verticale (non représentés) et du déflecteur 18 contre la traverse inférieure 20.

Ainsi, un élément central 48 s'étendant depuis un bord supérieur 50 du bouclier 10 peut être guidé le long de moyens d'indexation verticale localisés sur un élément de structure supérieur (non représenté) tel qu'une traverse supérieure ou bien sur une face avant technique (non représentée). Le bord supérieur 50 des retours latéraux 14 du bouclier 10 peut être guidé le long de moyens d'indexation verticale localisés sur des ailes (non représentées) du véhicule.

Lors du déplacement du déflecteur 18, la rampe 30 passe d'abord sous la portion haute 44 de la traverse 20, le plan dans lequel est compris le déflecteur 18 et le plan formé par la portion basse 42 de la traverse 20 étant alors sensiblement dans le prolongement l'un de l'autre, jusqu'à ce que le bas 32 de la rampe 30 entre en contact avec un bord 52 de la portion basse 42 de la traverse 20.

Comme la partie supérieure 46 du bouclier 10 est maintenue verticalement, la patte 24 se déforme. Dans un premier temps, la rampe 30 glisse le long du bord 52 jusqu'à son sommet 36. Dans un deuxième temps, le sommet 36 de la rampe 30 glisse le long d'une face inférieure 54 de la portion basse 42 jusqu'à ce que la rampe 30 remonte automatiquement de l'autre côté de la traverse inférieure 20 sous l'effet de la patte élastique 24.

Dans le cas où la rampe 30 est prolongée par la zone plane 40, ladite zone plane 40 glisse alors elle aussi le long de la face inférieure 54 de la traverse inférieure 20.

Ainsi, le plot de fixation 28 ne faisant que très peu saillie par rapport au sommet 36 de la rampe 30, le bord 52 de la traverse 20 rencontre d'abord la rampe 30, puis le plot de fixation 28, qui alors ne risque pas de s'accrocher dans la traverse inférieure 20 et ne se trouve donc pas dans la trajectoire de montage du bouclier 10. Il n'y a alors pas de risque de mauvais montage ou bien d'à-coup pendant l'opération.

Cependant, dans un autre mode de réalisation, non représenté, la hauteur du plot de fixation 28 peut être inférieure à la hauteur du sommet 36 de la rampe 30.

Après montage du bouclier 10, le déflecteur 18 est fixé sur la traverse inférieure 20 par des moyens de fixation connus en soi donc non décrits en détail. Il est ensuite possible de fixer l'écran de passage de roue à l'aide du plot de fixation 28.

Le mode de réalisation précédent décrit le montage d'un bouclier avant, mais l'invention pourrait tout aussi bien concerner le montage d'un bouclier arrière.

## Revendications

1. Agencement pour le montage d'un bouclier (10) de véhicule automobile comportant un déflecteur (18) d'orientation globalement horizontale s'étendant vers l'intérieur du véhicule, destiné à être monté sur un élément de structure inférieur (20) **caractérisé en ce que** le déflecteur (18) comporte à chacune de ses extrémités (22) une patte élastique (24), orientée vers l'intérieur du véhicule, sur laquelle sont ménagés au moins un plot de fixation (28) et au moins une rampe de montage (30), de manière que le bouclier (10) puisse passer, selon une trajectoire sensiblement longitudinale dirigée de l'extérieur vers l'intérieur du véhicule, d'une position initiale non montée dans laquelle la rampe (30) se situe d'un côté de l'élément inférieur de structure (20) à une position finale montée dans laquelle la rampe (30) se trouve de l'autre côté de l'élément inférieur de structure (20).

2. Agencement pour le montage d'un bouclier (10) selon la revendication 1, **caractérisé en ce que**, lors du montage du bouclier (10),
- une partie supérieure (46, 48, 50) du bouclier (10) se déplace le long de moyens d'indexation verticale et, simultanément,
- dans un premier temps, la rampe (30) glisse le long d'un bord (52) de l'élément de structure inférieur (20), puis, dans un deuxième temps, un sommet (36) de la rampe (30) se déplace le long d'une paroi inférieure (54) de l'élément de structure inférieur (20), jusqu'à ce que la rampe (30) remonte automatiquement de l'autre côté de l'élément de structure inférieur (20) sous l'effet de la patte élastique (24).

3. Agencement pour le montage d'un bouclier (10) selon la revendication 2, **caractérisée en ce que** le sommet (36) de la rampe (30) se prolonge par une zone plane (40).

4. Agencement pour le montage d'un bouclier (10) selon l'une quelconque des revendications 1 ou 2, **caractérisé en ce que** le plot de fixation (28) est localisé entre la rampe (30) et une zone de jonction (38) de la patte (24) et du déflecteur (18).

5. Agencement pour le montage d'un bouclier (10) selon la revendication 3, **caractérisé en ce que** le plot de fixation (28) se trouve entre la rampe (30) et la zone plane (40).

6. Agencement pour le montage d'un bouclier (10) selon l'une quelconque des revendications 2 à 5, **caractérisé en ce que** la rampe (30) et le plot de fixation (28) sont conformés de façon que, lors du montage du bouclier (10), le plot de fixation (28) puisse glisser contre l'élément de structure inférieur (20) sans être arrêté par le bord (52) de l'élément de structure inférieur (20).

7. Agencement pour le montage d'un bouclier (10) selon l'une quelconque des revendications précédentes, **caractérisé en ce que** la rampe (30) présente la forme d'une nervure longitudinale.

8. Agencement pour le montage d'un bouclier (10) selon l'une quelconque des revendication précédentes, **caractérisé en ce que** le plot de fixation (28) est destiné à la fixation d'un écran de passage de roue.

9. Agencement pour le montage d'un bouclier (10) selon la revendication 2 ou l'une quelconque des revendications 3 à 8 lorsqu'elles dépendent de la revendication 2, **caractérisé en ce que** les moyens d'indexation verticale de la partie supérieure (46) du bouclier (10) sont formés par un élément de structure supérieur.

10. Agencement pour le montage d'un bouclier (10) selon la revendication 2 ou l'une quelconque des revendications 3 à 9 lorsqu'elles dépendent de la revendication 2, **caractérisé en ce que** les moyens d'indexation verticale de la partie supérieure (46) du bouclier (10) sont constitués par des supports d'aile.

11. Agencement pour le montage d'un bouclier (10) selon l'une quelconque des revendications précédentes, **caractérisé en ce qu'**il est prévu des moyens de fixation du bouclier (10) sur l'élément de structure inférieur (20).

## Claims

1. Arrangement for mounting a motor vehicle bumper (10) comprising a deflector (18) directed horizontally overall and extending towards the inside of the vehicle, intended to be mounted on a lower structural element (20), **characterized in that** the deflector (18) has, at each of its ends (22), an elastic tab (24) directed towards the inside of the vehicle on which at least one fixing block (28) and at least one mounting ramp (30) are formed so that the bumper (10) can be moved, in a substantially longitudinal path from the outside towards the inside of the vehicle, from an unmounted initial position in which the ramp (30) lies to one side of the lower structural element (20) into a mounted final position in which the ramp (30) lies on the other side of the lower structural element (20).

2. Arrangement for mounting a bumper (10) according to Claim 1, **characterized in that,** when mounting the bumper (10),
- an upper part (46, 48, 50) of the bumper (10) moves along vertical indexing means and, at the same time,
- firstly, the ramp (30) slides along an edge (52) of the lower structural element (20) and then, secondly, a top (36) of the ramp (30) moves along a lower wall (54) of the lower structural element (20) until the ramp (30) automatically rises back up on the other side of the lower structural element (20) under the effect of the elastic tab (24).

3. Arrangement for mounting a bumper (10) according to Claim 2, **characterized in that** the top (36) of the ramp (30) is extended by a flat region (40).

4. Arrangement for mounting a bumper (10) according to either one of Claims 1 and 2, **characterized in that** the fixing block (28) is located between the ramp (30) and a joining region (38) where the tab (24) meets the deflector (18).

5. Arrangement for mounting a bumper (10) according to Claim 3, **characterized in that** the fixing block (28) is located between the ramp (30) and the flat region (40).

6. Arrangement for mounting a bumper (10) according to any one of Claims 2 to 5, **characterized in that** the ramp (30) and the fixing block (28) are configured such that as the bumper (10) is being mounted, the fixing block (28) can slide against the lower structural element (20) without being stopped by the edge (52) of the lower structural element (20).

7. Arrangement for mounting a bumper (10) according to any one of the preceding claims, **characterized in that** the ramp (30) has the form of a longitudinal rib.

8. Arrangement for mounting a bumper (10) according to any one of the preceding claims, **characterized in that** the fixing block (28) is intended for fixing a wheel arch protector.

9. Arrangement for mounting a bumper (10) according to Claim 2 or any one of Claims 3 to 8 when these are dependent on Claim 2, **characterized in that** the means of vertically indexing the upper part (46) of the bumper (10) are formed of an upper structural element.

10. Arrangement for mounting a bumper (10) according to Claim 2 or any one of Claims 3 to 9 when these are dependent on Claim 2, **characterized in that** the means of vertically indexing the upper part (46) of the bumper (10) consists of wing mounts.

11. Arrangement for mounting a bumper (10) according to any one of the preceding claims, **characterized in that** means are provided for fixing the bumper (10) to the lower structural element (20).

## Patentansprüche

1. Anordnung für die Montage eines KraftfahrzeugStoßfängers (10), der eine Ablenkeinrichtung (18) mit einer im Allgemeinen horizontalen Orientierung besitzt, die sich in Bezug auf das Fahrzeug nach innen erstreckt und dazu vorgesehen ist, an einem unteren Strukturelement (20) montiert zu werden, **dadurch gekennzeichnet, dass** die Ablenkeinrichtung (18) an jedem ihrer Enden (22) einen elastischen Ansatz (24) aufweist, der in Bezug auf das Fahrzeug nach innen orientiert ist und an dem wenigstens ein Befestigungshöcker (28) und wenigstens eine Montagerampe (30) ausgebildet sind, derart, dass sich der Stoßfänger (10) längs einer im Wesentlichen longitudinalen Bahn, die in Bezug auf das Fahrzeug von außen nach innen gerichtet ist, von einer anfänglichen nicht montierten Position, in der sich die Rampe (30) auf einer Seite des unteren Strukturelements (20) befindet, in eine montierte Endposition, in der sich die Rampe (30) auf der anderen Seite des unteren Strukturelements (20) befindet, bewegen kann.

2. Anordnung für die Montage eines Stoßfängers (10) nach Anspruch 1, **dadurch gekennzeichnet, dass** bei der Montage des Stoßfängers (10)
- ein oberer Teil (46, 48, 50) des Stoßfängers (10) sich längs vertikaler Indexierungsmittel verlagert und gleichzeitig
- zu einer ersten Zeit die Rampe (30) längs eines Randes (52) des unteren Strukturelements (20) gleitet und dann zu einer zweiten Zeit ein Scheitelpunkt (36) der Rampe (30) sich längs einer unteren Wand (54) des unteren Strukturelements (20) verlagert, bis die Rampe (30) von der anderen Seite des unteren Strukturelements (20) unter der Wirkung des elastischen Ansatzes (24) automatisch ansteigt.

3. Anordnung für die Montage eines Stoßfängers (10) nach Anspruch 2, **dadurch gekennzeichnet, dass** der Scheitelpunkt (36) der Rampe (30) durch eine ebene Zone (40) verlängert ist.

4. Anordnung für die Montage eines Stoßfängers (10) nach einem der Ansprüche 1 oder 2, **dadurch gekennzeichnet, dass** sich der Befestigungshöcker (28) zwischen der Rampe (30) und einer Verbindungszone (38) zwischen dem Ansatz (24) und der Ablenkeinrichtung (18) befindet.

5. Anordnung für die Montage eines Stoßfängers (10) nach Anspruch 3, **dadurch gekennzeichnet, dass** sich der Befestigungshöcker (28) zwischen der Rampe (30) und der ebenen Zone (40) befindet.

6. Anordnung für die Montage eines Stoßfängers (10) nach einem der Ansprüche 2 bis 5, **dadurch gekennzeichnet, dass** die Rampe (30) und der Befestigungshöcker (28) in der Weise ausgebildet sind, dass bei der Montage des Stoßfängers (10) der Befestigungshöcker (28) gegen das untere Strukturelement (20) gleiten kann, ohne durch den Rand (52) des unteren Strukturelements (20) angehalten zu werden.

7. Anordnung für die Montage eines Stoßfängers (10) nach einem der vorhergehenden Ansprüche, **dadurch gekennzeichnet, dass** die Rampe (30) die Form einer longitudinalen Rippe aufweist.

8. Anordnung für die Montage eines Stoßfängers (10) nach einem der vorhergehenden Ansprüche, **dadurch gekennzeichnet, dass** der Befestigungshöcker (28) für die Befestigung einer Radkastenabschirmung bestimmt ist.

9. Anordnung für die Montage eines Stoßfängers (10) nach Anspruch 2 oder einem der Ansprüche 3 bis 8, wenn abhängig von Anspruch 2, **dadurch gekennzeichnet, dass** die vertikalen Indexierungsmittel des oberen Teils (46) des Stoßfängers (10) durch ein oberes Strukturelement gebildet sind.

10. Anordnung für die Montage eines Stoßfängers (10) nach Anspruch 2 oder einem der Ansprüche 3 bis 9, wenn abhängig von Anspruch 2, **dadurch gekennzeichnet, dass** die vertikalen Indexierungsmittel des oberen Teils (46) des Stoßfängers (10) durch Flügelträger gebildet sind.

11. Anordnung für die Montage eines Stoßfängers (10) nach einem der vorhergehenden Ansprüche, **dadurch gekennzeichnet, dass** Mittel zum Befestigen des Stoßfängers (10) an dem unteren Strukturelement (20) vorgesehen sind.
